# EUROPEAN PATENT SPECIFICATION

(11) **EP 3 327 896 B1**
(45) Date of publication and mention of the grant of the patent: **15.03.2023**
(21) Application number: 17198153.3
(22) Date of filing: 24.10.2017
(51) Int. Cl.: H02J 9/06, H02J 7/00, H01R 13/66

(54) **POWER SUPPLY CONTROL METHOD AND APPARATUS OF POWER STRIP, COMPUTER PROGRAM AND RECORDING MEDIUM**
STROMVERSORGUNGSSTEUERUNGSVERFAHREN UND -VORRICHTUNG EINER STECKERLEISTE, COMPUTERPROGRAMM UND AUFZEICHNUNGSMEDIUM
PROCÉDÉ DE COMMANDE D'ALIMENTATION ET APPAREIL DE BANDE D'ALIMENTATION, PROGRAMME INFORMATIQUE ET SUPPORT D'ENREGISTREMENT

(30) Priority: 26.11.2016 CN 201611057401
(43) Date of publication of application: 30.05.2018
(73) Proprietor: Beijing Xiaomi Mobile Software Co., Ltd., Beijing 100085 (CN)
(72) Inventor: XIE, Yan, Beijing, 100085 (CN)
(74) Representative: Steinbauer, Florian

(56) References cited:
- CN-A- 105 896 677
- US-A1- 2012 201 062
- US-A1- 2014 330 989

## Description

### TECHNICAL FIELD

The present invention is related to the field of electronic device technology, and more particularly to a power supply control method and apparatus of a power strip, a computer program and a recording medium.

### BACKGROUND

A power strip, also called an extension block, a power board, a plug board, a plug bar or a wiring board, typically refers to a portable block of sockets with a power cable and a plug.

When charging an electronic device using a power strip, a person tends to forget to plug out the electronic device after the electronic device is fully charged, so that the electronic device tends to be overcharged, thereby not only causing a waste of power but also tending to cause a damage to the electronic device.

CN 105 896 677 A discloses that a power strip is controlled according to the state of charge of a battery.

US 2012/201062 A1 discloses that a power supply is controlled according to a received command of a remote controller.

US 2014/330989 A1 discloses a method and implementing computer system in which a smart power strip is controlled by a master device which is also plugged into the power strip. In an exemplary implementation, a computer or PC operates as a master device and a direct line of communication from the computer allows the OS to make a decision based on settings whether or not to power on or off individual power outlets on the power strip used in common by the computer and various peripheral devices. Thus, only selected peripheral devices are powered-on along with the computer when the computer or other master device is powered-on at a common power strip.

### SUMMARY

To overcome the problem in the related art, the present invention provides a power supply control method and apparatus of a power strip and the power strip, a computer program and a recording medium.

According to a first aspect of the present invention, there is provided a power supply control method of a power strip according to claim 1

In a possible implementation, controlling the power supply state of the socket of the power strip which is connected with the electronic device according to the working state of the electronic device comprises: when the electronic device has completed a preset task, controlling the socket which is connected with the electronic device to enter a power supply disabled state.

In a possible implementation, acquiring the working state of the electronic device comprises: acquiring, via a wire connecting the electronic device and the power strip, state information sent by the electronic device, the state information comprising the working state of the electronic device; or receiving, via a wireless communications technology, the state information sent by the electronic device.

According to the invention, before controlling the power supply state of the socket of the power strip which is connected with the electronic device according to the working state of the electronic device, the method further comprises: when it is detected that the electronic device is plugged in the power strip, determining the socket with which the electronic device is connected and device identification information of the electronic device; establishing a correspondence between the device identification information of the electronic device and the socket with which the electronic device is connected; and when the electronic device is in a preset working state, determining the socket with which the electronic device is connected according to the correspondence.

According to the invention, determining the device identification information of the electronic device comprises: determining a unit time electric current value of power supply to the electronic device; determining device identification information corresponding to the unit time electric current value, according to a pre-stored mapping table between preset unit time electric current values and preset device identification information; and determining the device identification information corresponding to the unit time electric current value as the device identification information of the electronic device

According to a second aspect of the present invention, there is provided a power supply control apparatus according to claim 4.

In a possible implementation, the power supply state control module comprises: a third power supply state control sub-module configured to, when the electronic device has completed a preset task, control the socket which is connected with the electronic device to enter a power supply disabled state.

In a possible implementation, the state acquiring module comprises: a first state acquiring sub-module configured to acquire, via a wire connecting the electronic device and the power strip, state information sent by the electronic device, the state information comprising the working state of the electronic device; or a second state acquiring sub-module configured to receive, via a wireless communications technology, the state information sent by the electronic device.

According to the invention, the apparatus further comprises a socket determining module which comprises: a first determining sub-module configured to, when it is detected that the electronic device is plugged in the power strip, determine the socket with which the electronic device is connected and device identification information of the electronic device; a correspondence establishing sub-module configured to establish a correspondence between the device identification information of the electronic device and the socket with which the electronic device is connected; and a socket determining sub-module configured to, when the electronic device is in a preset working state, determine the socket with which the electronic device is connected according to the correspondence.

According to the invention, the first determining sub-module comprises: a unit time electric current value determining unit configured to determine a unit time electric current value of power supply to the electronic device; a first device identification information determining unit configured to determine device identification information corresponding to the unit time electric current value according to a pre-stored mapping table between preset unit time electric current values and preset device identification information; and a second device identification information determining unit configured to determine the device identification information corresponding to the unit time electric current value as the device identification information of the electronic device.

In one particular embodiment, the steps of the power supply control method of a power strip are determined by computer program instructions.

Consequently, according to a third aspect, the invention is also directed to a computer program for executing the steps of the power supply control method of a power strip as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may produce the following advantageous effects. By acquiring a working state of an electronic device, and controlling a power supply state of a socket of a power strip which is connected with the electronic device according to the working state of the electronic device, the present invention enables flexibly controlling the power supply state of the socket of the power strip, so that the electronic device can be prevented from being overcharged and power supply to the electronic device can be prevented if the electronic device that does not need to be power-supplied, thereby not only saving power and but also protecting the electronic device.

It should be understood that both the foregoing general description and the following detailed description are only exemplary and explanatory.

### BRIEF DESCRIPTION OF THE DRAWINGS

The accompanying drawings, which are incorporated in and constitute a part of the description, illustrate the embodiments according to the present invention, and serve to explain the principles of the present invention together with the description.
Fig. 1 is a flow chart showing a power supply control method of a power strip according to an exemplary embodiment.
Fig. 2 is a schematic diagram of a power strip according to an exemplary embodiment.
Fig. 3 shows a flow chart of a power supply control method of a power strip according to an example of an exemplary embodiment.
Fig. 4 is a flow chart illustrating step S31 of determining device identification information of an electronic device in a power supply control method of a power strip according to an example of an exemplary embodiment.
Fig. 5 is a flow chart illustrating step S31 of determining device identification information of an electronic device in a power supply control method of a power strip according to another example.
Fig. 6 is a block diagram of a power supply control apparatus of a power strip according to an exemplary embodiment.
Fig. 7A is a block diagram of a power supply control apparatus of a power strip according to an example of an exemplary embodiment.
Fig. 7B is a block diagram of a state acquiring module in Fig. 7A according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatus and methods consistent with aspects related to the invention as recited in the appended claims.

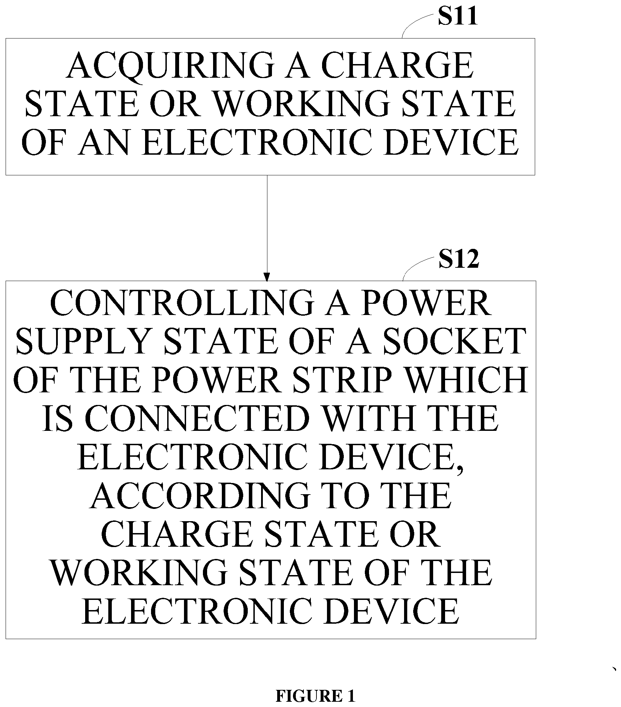

Fig. 1 is a flow chart showing a power supply control method of a power strip according to an exemplary embodiment. The method may be applied to a power strip. As shown in Fig. 1, the method comprises the following steps.

At step S11, a working state of an electronic device is acquired.

At step S12, a power supply state of a socket of the power strip which is connected with the electronic device is controlled, according to working state of the electronic device.

By controlling a power supply state of a socket of a power strip which is connected with an electronic device according to a working state of the electronic device, the present embodiment enables flexibly controlling the power supply state of the socket of the power strip, so that the electronic device can be prevented from being overcharged and power supply to the electronic device can be prevented if the electronic device does not need to be power-supplied, thereby not only saving power and but also protecting the electronic device.

In the present embodiment, for an electronic device charged via the power strip, a charge state of the electronic device may include but is not limited to whether a State Of Charge (SOC) of the electronic device meets a preset condition, such as whether the SOC indicates full charge or whether the SOC exceeds a preset threshold, which is not limited in the present invention. For an electronic device powered via the power strip, a working state of the electronic device may include but is not limited to whether the electronic device is performing a task or whether it has completed a preset task, such as whether the electronic device has completed a charging task or a task initiated by itself (such as cooking), which is not limited in the present invention.

In a possible implementation, acquiring the working state of the electronic device comprises: acquiring, via a wire connecting the electronic device and the power strip, state information sent by the electronic device, the state information comprising the working state of the electronic device. For example, if a cell phone is connected with the power strip via a data line, a working state of the cell phone can be acquired via the data line.

In the embodiment, the working state of the electronic device connected with the power strip may be acquired in a wired manner. When the electronic device detects that it satisfies a certain working state, it may actively send its state information to the power strip. Alternatively, the power strip may send a request message to the electronic device, requesting the electronic device to report its working state. After receiving the request message, the electronic device returns its state information to the power strip. The power strip may send the request message to the electronic device periodically (for example, once per minute).

The embodiment enables communications between the electronic device and the power strip via electrical signals by introducing the above new function into an existing system in which an electronic device is charged via a power strip, so that the power supply state of the socket connected with the electronic device can be promptly and effectively controlled.

In a further possible implementation, acquiring the working state of the electronic device comprises: receiving, via a wireless communications technology, the state information sent by the electronic device, the state information comprising the working state of the electronic device. The wireless communications technology may include a Wi-Fi (Wireless Fidelity) technology, a Bluetooth technology, a mobile communications network or the like, which is not limited herein.

In the embodiment, the working state of the electronic device connected with the power strip may be acquired in a wireless manner. For example, Bluetooth modules may be provided in the power strip and the electronic device respectively to establish a communications link between the power strip and the electronic device. When the electronic device detects that it satisfies a certain working state, it may actively send its state information to the power strip in a wireless manner. Alternatively, the power strip may periodically send a request message to the electronic device, requesting acquisition of the working state of the electronic device.

The embodiment enables wireless communications between the electronic device and the power strip, so that the power strip can promptly and accurately acquire the state information of the electronic device and then effectively control the power supply state of the socket connected with the electronic device.

In the present embodiment, the power strip may charge electronic devices, such as a cell phone, a portable power source and a tablet computer, and may supply power to electronic devices, such as an electric kettle and an electric cooker. The types and functions of the electronic devices are not limited in the present invention.

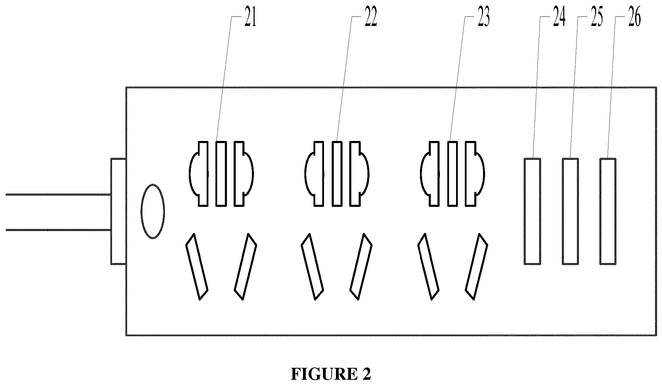

Fig. 2 is a schematic diagram of a power strip according to an exemplary embodiment. As shown in Fig. 2, the power strip comprises a first socket 21, a second socket 22, a third socket 23, a fourth socket 24, a fifth socket 25, and a sixth socket 26. The first, second and third sockets 21, 22, 23 are five-hole sockets. The fourth, fifth and sixth sockets 24, 25, 26 are USB (Universal Serial Bus) sockets. For example, the first socket 21 may be connected with an electric kettle, the third socket 23 with an electric cooker, and the fourth socket 24 with a cell phone.

It should be noted that the power strip may include one or more types of various sockets such as two-hole sockets, three-hole sockets, five-hole sockets and USB sockets. The types of the sockets included in the power strip and the number of each type of sockets are not limited in the present embodiment.

In addition, correspondences between working states of the electronic device and power supply states of the socket may be set by those skilled in the art as needed, and are not limited in the present invention.

In a possible implementation, controlling the power supply state of the socket of the power strip which is connected with the electronic device according to the working state of the electronic device comprises: when the electronic device has completed a preset task, controlling the socket which is connected with the electronic device to enter a power supply disabled state. For example, when an electric cooker cooks well some rice, it may send a message indicating that a cooking task has been completed to the power strip. After receiving the message indicating that a cooking task has been completed, the power strip determines that the electric cooker has completed a preset task, and may control the socket corresponding to the electric cooker to enter a power supply disabled state so as to cut off power supply to the electric cooker, thereby not only saving power but also protecting the electric cooker. As another example, when an electric kettle completes a water heating task, it may send a message indicating that a water heating task has been completed to the power strip. After receiving the message indicating that a water heating task has been completed by the electric kettle, the power strip determines that the electric kettle has completed a preset task, and may control the socket corresponding to the electric kettle to enter a power supply disabled state so as to cut off power supply to the electric kettle, thereby not only saving power but also protecting the electric kettle.

In addition, the preset task in the present invention may also refer to a preset amount of task designated in advance by a user. For example, supposing a user sets in advance a humidifying period of 1 hour for an indoor air humidifier, then, when 1 hour passes, the humidifier may send a message indicating that humidifying has been completed to the power strip. After receiving the message, the power strip controls the socket corresponding to the humidifier to cut off power supply to the humidifier.

In a possible implementation, when any of the sockets has no electronic device plugged therein, the socket may be controlled to enter a power supply disabled state, thereby improving safety of the power strip.

In a possible implementation, before controlling the power supply state of the socket of the power strip which is connected with the electronic device according to the working state of the electronic device, the method further comprises: when it is detected that the electronic device is plugged in the power strip, determining the socket with which the electronic device is connected and device identification information of the electronic device; establishing a correspondence between the device identification information of the electronic device and the socket with which the electronic device is connected; and when the electronic device is in a preset a preset working state, determining the socket with which the electronic device is connected according to the correspondence.

In the present embodiment, the preset charge state may be the above-mentioned SOC, and the preset working state may be the above-mentioned task completion state. In the present embodiment, whenever it is detected that an electronic device is inserted into the power strip, a correspondence between identification information of the inserted electronic device and its connected socket is established. Each socket of the power strip may be preconfigured with identification information, and a correspondence between the identification information of the inserted electronic device and the identification information of the socket may be established. The present embodiment facilitates quick and accurate finding of a socket corresponding to a specific electronic device when power supply to the specific electronic device needs to be controlled afterwards.

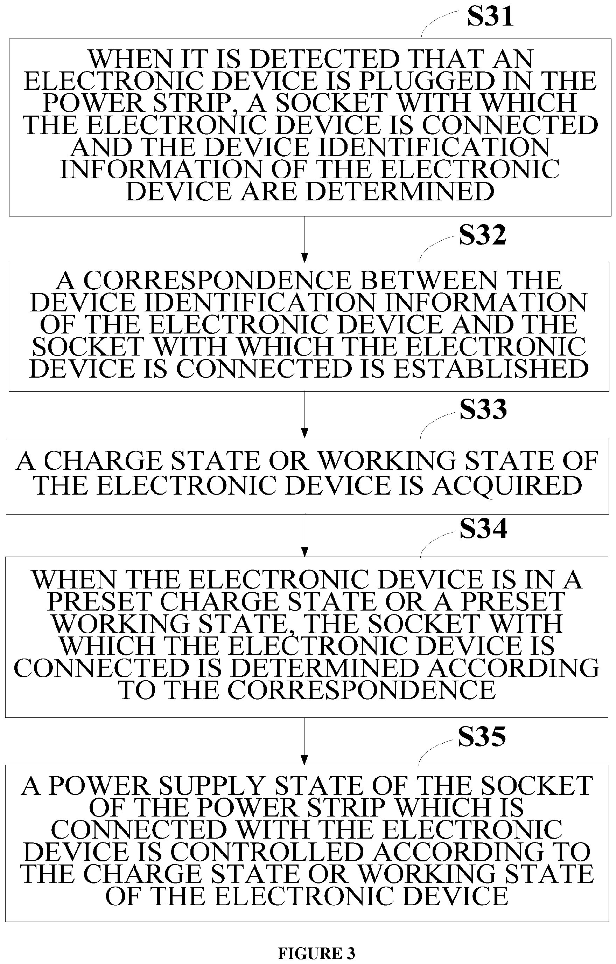

Fig. 3 is a flow chart illustrating a power supply control method of a power strip according to an example of an exemplary embodiment. As shown in Fig. 3, the method comprises the following steps.

In step S31, when it is detected that an electronic device is plugged in the power strip, a socket with which the electronic device is connected and device identification information of the electronic device are determined.

For example, sensors may be provided to metal sheets of respective sockets of the power strip so as to detect, via the sensors, whether an electronic device is inserted into one of the sockets and which socket the electronic device is inserted in. When a sensor detects that an electronic device is inserted, a socket corresponding to the sensor may be determined as the socket connected with the electronic device.

In a possible implementation, the device identification information of the electronic device may be acquired via a wire connecting the electronic device and the power strip, and the acquired device identification information may be determined as the device identification information of the electronic device.

In step S32, a correspondence between the device identification information of the electronic device and the socket with which the electronic device is connected is established.

For example, a mapping table may be established to record the correspondence between the device identification information of the electronic device and the socket with which the electronic device is connected.

In step S33, a working state of the electronic device is acquired.

For step S33, reference can be made to the above description of step S11.

In step S34, when the electronic device is in a preset a preset working state, the socket with which the electronic device is connected is determined according to the correspondence.

The preset working state of the electronic device may refer to a state in which the electronic device has completed a preset task.

In step S35, a power supply state of the socket of the power strip which is connected with the electronic device is controlled according to the working state of the electronic device.

For step S35, reference can be made to the above description of step S12.

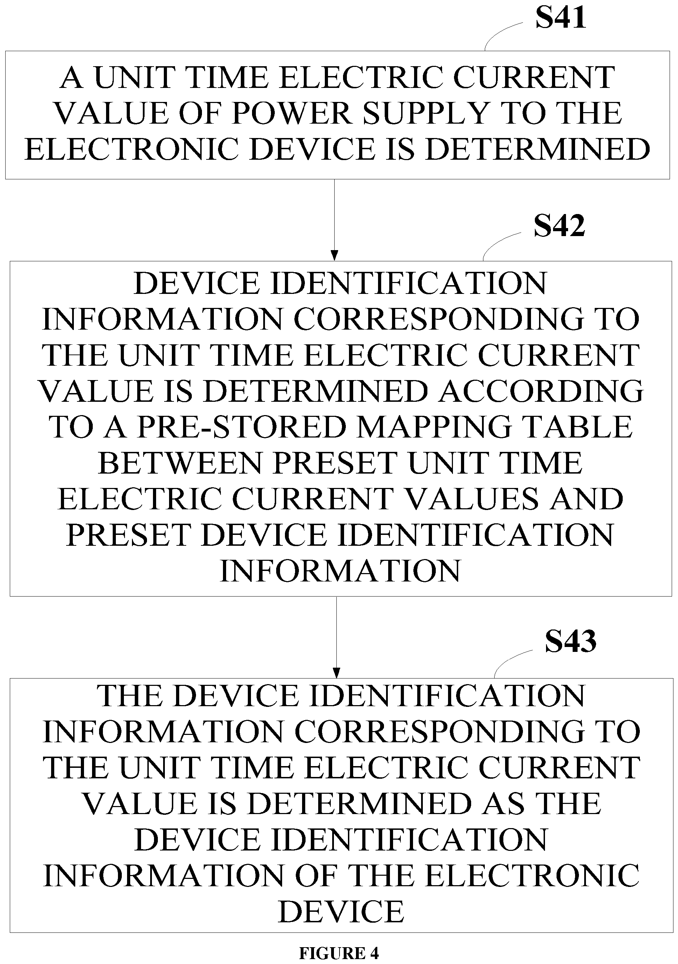

Fig. 4 is a flow chart illustrating step S31 of determining device identification information of an electronic device in a power supply control method of a power strip according to an example of an exemplary embodiment. As shown in Fig. 4, determining the device identification information of the electronic device comprises the following steps.

In step S41, a unit time electric current value of the power supply to the electronic device is determined.

In this example, a unit time electric current value in a charging line or data line connected with the electronic device may be detected by the electronic device and sent to the power strip.

In step S42, device identification information corresponding to the unit time electric current value is determined, according to a pre-stored mapping table between preset unit time electric current values and preset device identification information.

In this example, a mapping table is pre-stored, which records correspondences between preset unit time electric current values and preset device identification information. After determining the unit time electric current value of the power supply to the electronic device, the corresponding device identification information can be determined according to the pre-stored mapping table.

In step S43, the device identification information corresponding to the unit time electric current value is determined as the device identification information of the electronic device.

The present embodiment takes full consideration of the fact that, because working electric currents required by different electronic devices are different, different electronic devices can be distinguished based on the working electric currents. For example, the working electric current of an electric cooker is about 3.2A, and the working electric current of a washing machine is about 1.5A. Correspondences between working electric currents of different electronic devices and identifications of the electronic devices may be pre-stored, so that, after determining a working electric current of an electronic device, the electronic device can be determined according to the correspondences. Alternatively, in case network communications is possible, the correspondence may be found on the network based on the detected electric current value, and then the electronic device corresponding to the detected electric current value may be determined.

A unit time electric current value of power supply to an electronic device is determined, device identification information corresponding to the unit time electric current value is determined according to a pre-stored mapping table, and the device identification information corresponding to the unit time electric current value is determined as the device identification information of the electronic device, thereby enabling a correspondence between the device identification information of the electronic device and the socket with which the electronic device is connected to be established based on the determined device identification information of the electronic device.

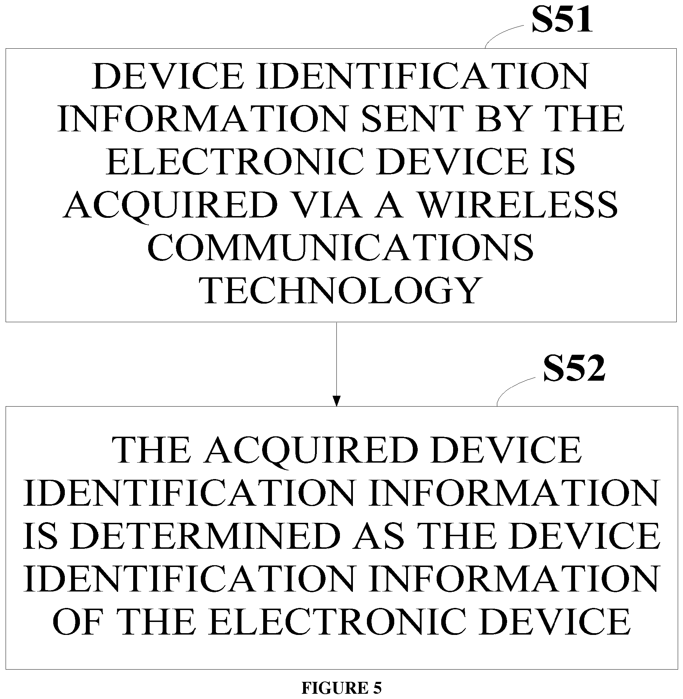

Fig. 5 is a flow chart illustrating step S31 of determining device identification information of an electronic device in a power supply control method for a power strip according to another example, which is not claimed. As shown in Fig. 5, determining the device identification information of the electronic device comprises the following steps.

In step S51, device identification information sent by the electronic device is acquired via a wireless communications technology.

In this example, when the electronic device is inserted into the power strip, the electronic device may send its device identification information to the power strip via a wireless communications technology, so that the power strip can receive the device identification information of the electronic device.

In step S52, the acquired device identification information is determined as the device identification information of the electronic device.

In this example, device identification information of an electronic device is acquired via a wireless communications technology, and the acquired device identification information is detected as the device identification information of the electronic device, thereby enabling a correspondence between the device identification information of the electronic device and the socket with which the electronic device is connected to be established based on the determined device identification information of the electronic device.

In a possible implementation, when the electronic device changes from a state of being connected with the power strip to a state of being disconnected from the power strip or when the electronic device is plugged out of the power strip, the correspondence between the electronic device and the socket may be deleted.

In the following, there is also provided a power supply control apparatus of a power strip below for implementing the above power supply control method of a power strip according to an embodiment of the present invention.

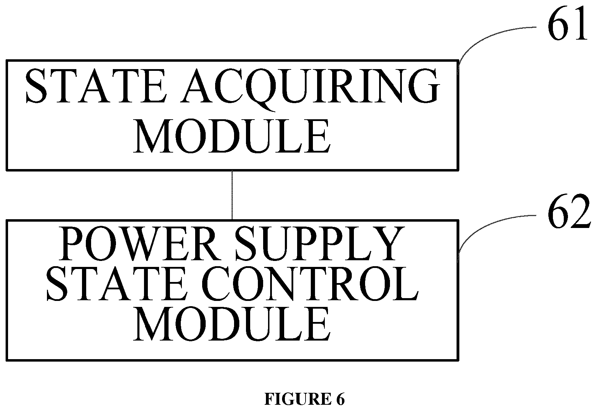

Fig. 6 is a block diagram of a power supply control apparatus of a power strip according to an exemplary embodiment. As shown in Fig. 6, the apparatus comprises: a state acquiring module 61 and a power supply state control module 62. The state acquiring module 61 is configured to acquire a working state of an electronic device. The power supply state control module 62 is configured to control a power supply state of a socket of the power strip which is connected with the electronic device, according to the working state of the electronic device.

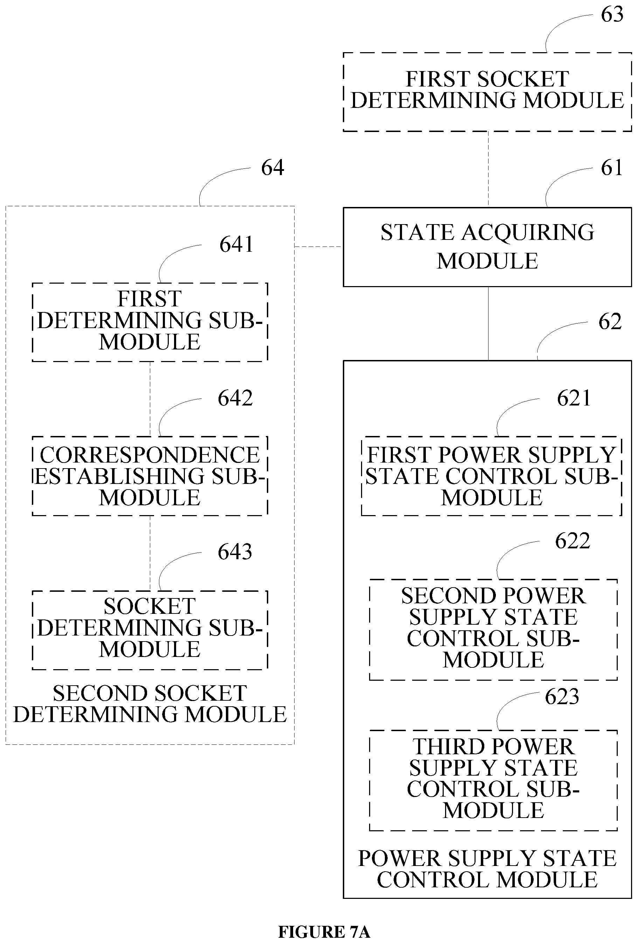

Fig. 7A is a block diagram of a power supply control apparatus of a power strip according to an example of an exemplary embodiment. Referring to Fig. 7A, in a possible implementation, the power supply state control module 62 comprises a first power supply state control sub-module 621. The first power supply state control sub-module 621 is configured to, when an SOC of the electronic device reaches a first preset value, control the socket which is connected with the electronic device to enter a power supply disabled state.

In a possible implementation, the power supply state control module 62 comprises a second power supply state control sub-module 622. The second power supply state control sub-module 622 is configured to, when the SOC of the electronic device is smaller than a second preset value, control the socket which is connected with the electronic device to enter a power supply enabled state.

In a possible implementation, the power supply state control module 62 comprises a third power supply state control sub-module 623. The third power supply state control sub-module 623 is configured to, when the electronic device has completed a preset task, control the socket which is connected with the electronic device to enter a power supply disabled state.

In a possible implementation, the state acquiring module 62 comprises a first state acquiring sub-module 621. The first state acquiring sub-module 621 is configured to acquire, via a wire connecting the electronic device and the power strip, state information sent by the electronic device, the state information comprising the working state of the electronic device.

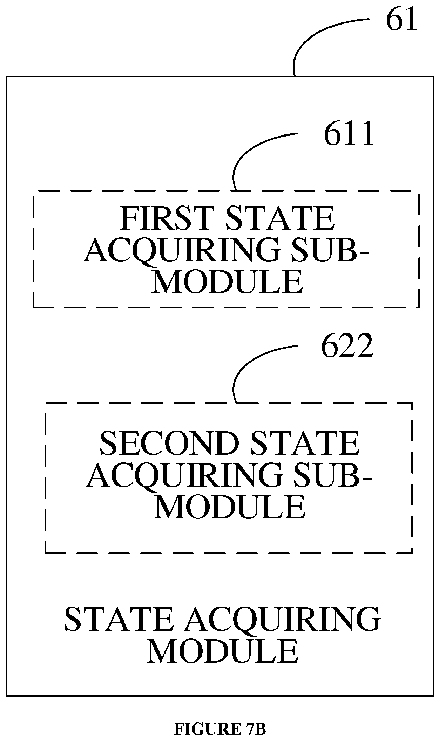

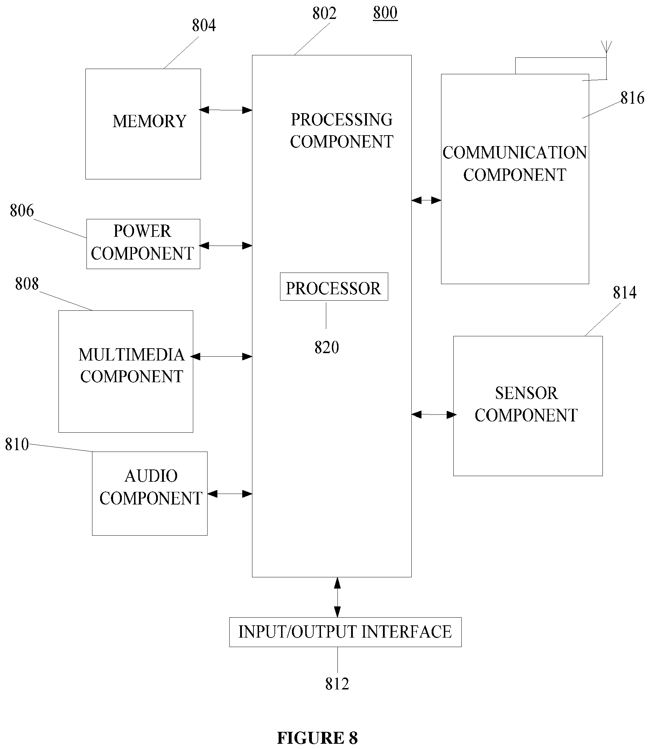

Referring to Fig. 7B, in a possible implementation, the power supply state control module 62 comprises a second state acquiring sub-module 622. The second state acquiring sub-module 622 is configured to receive, via a wireless communications technology, the state information sent by the electronic device.

Referring back to Fig. 7A, in a possible implementation, the apparatus further comprises a first socket determining module 63. The first socket determining module 63 is configured to, when it is detected that the electronic device is plugged in the power strip, determine the socket with which the electronic device is connected according to a sensing signal detected by a sensor provided on a metal sheet of the socket of the power strip.

The apparatus further comprises a second socket determining module 64. The second socket determining module 64 comprises a first determining sub-module 641, a correspondence establishing sub-module 642 and a socket determining sub-module 643. The first determining sub-module 641 is configured to, when it is detected that the electronic device is plugged in the power strip, determine the socket with which the electronic device is connected and device identification information of the electronic device. The correspondence establishing sub-module 642 is configured to establish a correspondence between the device identification information of the electronic device and the socket with which the electronic device is connected. The socket determining sub-module 643 is configured to, when the electronic device is in a preset a preset working state, determine the socket with which the electronic device is connected according to the correspondence.

The first determining sub-module 641 comprises: a unit time electric current value determining unit, a first device identification information determining unit and a second device identification information determining unit. The unit time electric current value determining unit is configured to determine a unit time electric current value of the power supply to the electronic device. The first device identification information determining unit is configured to determine device identification information corresponding to the unit time electric current value, according to a pre-stored mapping table between preset unit time electric current values and preset device identification information. The second device identification information determining unit is configured to determine the device identification information corresponding to the unit time electric current value as the device identification information of the electronic device.

In a possible implementation, the first determining sub-module 641 comprises: a device identification information acquiring unit and a third device identification information determining unit. The device identification information acquiring unit is configured to acquire device identification information of the electronic device via a wireless communications technology. The third device identification information determining unit is configured to determine the acquired device identification information as the device identification information of the electronic device.

Regarding the apparatuses in the above embodiments, the specific operations performed by the respective modules have been described in detail in the method embodiments, and will not be elaborated herein.

The present embodiment enables flexibly controlling a power supply state of a socket of a power strip, so that an electronic device can be prevented from being overcharged and power can be prevented from being supplied to an electronic device that does not need to be power supplied, thereby not only saving power but also protecting the electronic device.

Another embodiment of the present invention provides a power strip comprising any of the above power supply control apparatuses of a power strip.

Another embodiment of the present invention provides a power supply control apparatus of a power strip, the apparatus comprising: a processor; and a memory configured to store instructions executable by the processor. The processor is configured to: acquire a working state of an electronic device; and control a power supply state of a socket of the power strip which is connected with the electronic device according to the working state of the electronic device.

## Claims

1. A power supply control method of a power strip, the method comprising:
acquiring (S11, S13) a working state of an electronic device; the working state of the electronic device including whether the electronic device is performing a task or
whether it has completed a preset task, wherein the task does not include charging a battery; and
controlling (S12) a power supply state of a socket of the power strip which is connected with the electronic device, according to the working state of the electronic device,
before controlling (S12) the power supply state of the socket of the power strip which is connected with the electronic device according to the working state of the electronic device, the method further comprises:
- when it is detected that the electronic device is plugged in the power strip, determining (S31) the socket with which the electronic device is connected and device identification information of the electronic device;
- establishing (S32) a correspondence between the device identification information of the electronic device and the socket with which the electronic device is connected; and
- when the electronic device is in a preset working state, determining (S34) the socket with which the electronic device is connected according to the correspondence, **characterized in that** determining the device identification information of the electronic device comprises:
- determining (S41) a unit time electric current value of power supply to the electronic device;
- determining (S42) device identification information corresponding to the unit time electric current value, according to a pre-stored mapping table between preset unit time electric current values and preset device identification information; and
- determining (S43) the device identification information corresponding to the unit time electric current value as the device identification information of the electronic device

2. The method according to claim 1, wherein controlling (S12) the power supply state of the socket of the power strip which is connected with the electronic device, according to the working state of the electronic device, comprises:
when the electronic device has completed a preset task, controlling the socket which is connected with the electronic device to enter a power supply disabled state.

3. The method according to any one of claims 1 or 2, wherein acquiring (S33) the working state of the electronic device comprises:
acquiring, via a wire connecting the electronic device and the power strip, state information sent by the electronic device, the state information comprising the working state of the electronic device; or
receiving, via a wireless communications technology, the state information sent by the electronic device.

4. A power supply control apparatus of a power strip, the apparatus comprising:
a state acquiring module (61) configured to acquire a working state of an electronic device; the working state of the electronic device including whether the electronic device is performing a task or whether it has completed a preset task, wherein the task does not include charging a battery; and
a power supply state control module (62) configured to control a power supply state of a socket of the power strip which is connected with the electronic device, according to the working state of the electronic device,
a socket determining module which comprises: a first determining sub-module configured to, when it is detected that the electronic device is plugged in the power strip, determine the socket with which the electronic device is connected and device identification information of the electronic device; a correspondence establishing sub-module configured to establish a correspondence between the device identification information of the electronic device and the socket with which the electronic device is connected; and a socket determining sub-module configured to, when the electronic device is in a preset working state, determine the socket with which the electronic device is connected according to the correspondence,
**characterized in that** the first determining sub-module comprises:
a unit time electric current value determining unit configured to determine a unit time electric current value of power supply to the electronic device;
a first device identification information determining unit configured to determine device identification information corresponding to the unit time electric current value according to a pre-stored mapping table between preset unit time electric current values and preset device identification information; and
a second device identification information determining unit configured to determine the device identification information corresponding to the unit time electric current value as the device identification information of the electronic device.

5. The apparatus according to claim 4, wherein the power supply state control module (621) comprises: a third power supply state control sub-module (623) configured to, when the electronic device has completed a preset task, control the socket which is connected with the electronic device to enter a power supply disabled state.

6. The apparatus according to any one of claims 4 or 5, wherein the state acquiring module (61) comprises:
a first state acquiring sub-module (611) configured to acquire, via a wire connecting the electronic device and the power strip, state information sent by the electronic device, the state information comprising the working state of the electronic device; or
a second state acquiring sub-module (612) configured to receive, via a wireless communications technology, the state information sent by the electronic device.

7. A computer program including instructions for executing the steps of a power supply control method of a power strip according to any of claims 1 to 3 when said program is executed by a computer.

8. A recording medium readable by a computer and having recorded thereon a computer program according to claim 7.

## Patentansprüche

1. Verfahren zum Steuern der Stromversorgung einer Steckdosenleiste, wobei das Verfahren umfasst:
Erfassen (S11, S 13) eines Arbeitszustands einer elektronischen Vorrichtung; wobei der Arbeitszustand der elektronischen Vorrichtung beinhaltet, ob die elektronische Vorrichtung eine Aufgabe durchführt oder ob sie eine voreingestellte Aufgabe abgeschlossen hat, wobei die Aufgabe nicht das Laden einer Batterie beinhaltet; und
Steuern (S12) eines Stromversorgungszustands einer Steckdose der Steckdosenleiste, die mit dem elektronischen Gerät verbunden ist, in Abhängigkeit vom Betriebszustand des elektronischen Geräts,
wobei das Verfahren ferner vor dem Steuern (S 12) des Stromversorgungszustands der Steckdose der Steckdosenleiste, die mit dem elektronischen Gerät verbunden ist, entsprechend dem Arbeitszustand des elektronischen Geräts umfasst:
- wenn erkannt wird, dass das elektronische Gerät in die Steckdosenleiste eingesteckt ist, Bestimmen (S31) der Steckdose, mit der das elektronische Gerät verbunden ist, und der Geräteidentifikationsinformation des elektronischen Geräts;
- Herstellen (S32) einer Korrespondenz zwischen der Geräteidentifikationsinformation des elektronischen Geräts und der Steckdose, mit der das elektronische Gerät verbunden ist; und
- wenn sich das elektronische Gerät in einem voreingestellten Arbeitszustand befindet, Bestimmen (S34) der Steckdose, mit der das elektronische Gerät verbunden ist, entsprechend der Korrespondenz,
**dadurch gekennzeichnet, dass** das Bestimmen der Geräteidentifikationsinformationen des elektronischen Geräts umfasst:
- Bestimmen (S41) eines Einheitszeitwertes des elektrischen Stroms für die Stromversorgung des elektronischen Geräts;
- Bestimmen (S42) von Geräteidentifikationsinformationen, die dem elektrischen Einheitszeitstromwert entsprechen, gemäß einer vorab gespeicherten Zuordnungstabelle zwischen voreingestellten elektrischen Einheitszeitstromwerten und voreingestellten Geräteidentifikationsinformationen, und
- Bestimmen (S43) der Geräteidentifikationsinformation, die dem elektrischen Einheitszeitstromwert entspricht, als die Geräteidentifikationsinformation des elektronischen Geräts.

2. Verfahren nach Anspruch 1, wobei das Steuern (S12) des Stromversorgungszustands der Steckdose der Steckdosenleiste, die mit dem elektronischen Gerät verbunden ist, entsprechend dem Betriebszustand des elektronischen Geräts umfasst:
wenn das elektronische Gerät eine voreingestellte Aufgabe erfüllt hat, Steuern der mit dem elektronischen Gerät verbundene Steckdose so, dass sie in einen Stromversorgungs-Deaktivierungszustand übergeht.

3. Verfahren nach einem der Ansprüche 1 oder 2, wobei das Erfassen (S33) des Betriebszustands des elektronischen Geräts umfasst:
Erfassen von Zustandsinformationen, die von dem elektronischen Gerät gesendet werden, über ein Kabel, das das elektronische Gerät und die Steckdosenleiste verbindet, wobei die Zustandsinformationen den Betriebszustand des elektronischen Geräts umfassen; oder
Empfang der von der elektronischen Vorrichtung gesendeten Zustandsinformationen über eine drahtlose Kommunikationstechnologie.

4. Vorrichtung zum Steuern der Stromversorgung einer Steckdosenleiste, wobei die Vorrichtung umfasst:
ein Zustandserfassungsmodul (61), das so konfiguriert ist, dass es einen Arbeitszustand eines elektronischen Geräts erfasst; wobei der Arbeitszustand des elektronischen Geräts beinhaltet, ob das elektronische Gerät eine Aufgabe durchführt oder ob es eine voreingestellte Aufgabe abgeschlossen hat, wobei die Aufgabe nicht das Laden einer Batterie umfasst; und
ein Stromversorgungszustands-Steuermodul (62), das so konfiguriert ist, dass es einen Stromversorgungszustand einer Steckdose der Steckdosenleiste, die mit dem elektronischen Gerät verbunden ist, entsprechend dem Betriebszustand des elektronischen Geräts steuert,
ein Steckdosenbestimmungsmodul, das umfasst: ein erstes Bestimmungsuntermodul, das so konfiguriert ist, dass es, wenn erfasst wird, dass das elektronische Gerät in die Steckdosenleiste eingesteckt ist, die Steckdose, mit der das elektronische Gerät verbunden ist, und Geräteidentifikationsinformationen des elektronischen Geräts bestimmt; ein Korrespondenzherstellungsuntermodul, das so konfiguriert ist, dass es eine Korrespondenz zwischen den Geräteidentifikationsinformationen des elektronischen Geräts und der Steckdose, mit der das elektronische Gerät verbunden ist, herstellt; und ein Steckdosenbestimmungsuntermodul, das so konfiguriert ist, dass es, wenn sich das elektronische Gerät in einem voreingestellten Arbeitszustand befindet, die Steckdose, mit der das elektronische Gerät verbunden ist, gemäß der Korrespondenz bestimmt,
**dadurch gekennzeichnet, dass** das erste Bestimmungsuntermodul ferner Folgendes umfasst:
eine Einheit zum Bestimmen des Zeitwerts des elektrischen Stroms, die so konfiguriert ist, dass sie einen Zeitwert des elektrischen Stroms für die Stromversorgung des elektronischen Geräts bestimmt;
eine erste Geräteidentifikationsinformations-Bestimmungseinheit, die so konfiguriert ist, dass sie Geräteidentifikationsinformationen, die dem elektrischen Einheitszeitstromwert entsprechen, gemäß einer vorab gespeicherten Zuordnungstabelle zwischen voreingestellten elektrischen Einheitszeitstromwerten und voreingestellten Geräteidentifikationsinformationen bestimmt; und
eine zweite Einheit zum Bestimmen von Geräteidentifikationsinformationen, die so konfiguriert ist, dass sie die Geräteidentifikationsinformationen, die dem elektrischen Einheitszeitstromwert entsprechen, als die Geräteidentifikationsinformationen des elektronischen Geräts bestimmt.

5. Vorrichtung nach Anspruch 4, wobei das Stromversorgungszustands-Steuermodul (621) Folgendes umfasst:
ein drittes Stromversorgungszustands-Steuerungsuntermodul (623), das so konfiguriert ist, dass es, wenn die elektronische Vorrichtung eine voreingestellte Aufgabe abgeschlossen hat, die Steckdose, die mit der elektronischen Vorrichtung verbunden ist, so steuert, dass sie in einen Stromversorgungs-Deaktivierungszustand übergeht.

6. Vorrichtung nach einem der Ansprüche 4 oder 5, wobei das Zustandserfassungsmodul (61) umfasst:
ein erstes Zustandserfassungs-Untermodul (611), das so konfiguriert ist, dass es über eine Leitung, die das elektronische Gerät und die Steckdosenleiste verbindet, Zustandsinformationen erfasst, die von dem elektronischen Gerät gesendet werden, wobei die Zustandsinformationen den Betriebszustand des elektronischen Geräts umfassen; oder
ein zweites Zustandserfassungs-Untermodul (612), das so konfiguriert ist, dass es über eine drahtlose Kommunikationstechnologie die von der elektronischen Vorrichtung gesendeten Zustandsinformationen empfängt.

7. Computerprogramm mit Anweisungen zum Ausführen der Schritte eines Verfahren zum Steuern der Stromversorgung einer Steckdosenleiste nach einem der Ansprüche 1 bis 3, wenn das Programm von einem Computer ausgeführt wird.

8. Speichermedium, das von einem Computer gelesen werden kann und auf dem ein Computerprogramm nach Anspruch 7 gespeichert ist.

## Revendications

1. Procédé de commande de l'alimentation électrique d'une barrette d'alimentation, le procédé comprenant :
acquérir (S 11, S13) d'un état de fonctionnement d'un dispositif électronique ; l'état de fonctionnement du dispositif électronique comprenant le fait que le dispositif électronique est en train d'exécuter une tâche ou qu'il a terminé une tâche prédéfinie, dans lequel la tâche ne comprend pas la charge d'une batterie ; et
commander (S12) un état d'alimentation d'une prise de la barrette d'alimentation qui est connectée au dispositif électronique, selon l'état de fonctionnement du dispositif électronique,
avant de commander (S12) l'état d'alimentation de la prise de la barrette d'alimentation qui est connectée au dispositif électronique selon l'état de fonctionnement du dispositif électronique, le procédé comprend en outre :
- lorsqu'il est détecté que le dispositif électronique est branché dans la barrette d'alimentation, déterminer (S31) la prise avec laquelle le dispositif électronique est connecté et les informations d'identification de dispositif du dispositif électronique ;
- établir (S32) une correspondance entre les informations d'identification du dispositif électronique et la prise avec laquelle le dispositif électronique est connecté ; et
- lorsque le dispositif électronique est dans un état de travail prédéfini, déterminer (S34) la prise avec laquelle le dispositif électronique est connecté en fonction de la correspondance,
**caractérisé en ce que** la détermination des informations d'identification du dispositif électronique comprend :
- déterminer (S41) une valeur de courant électrique par unité de temps de l'alimentation du dispositif électronique ;
- déterminer (S42) des informations d'identification de dispositif correspondant à la valeur de courant électrique de temps unitaire, selon une table de correspondance pré-enregistrée entre des valeurs de courant électrique de temps unitaire prédéfinies et des informations d'identification de dispositif prédéfinies ; et
- déterminer (S43) l'information d'identification de dispositif correspondant à la valeur de courant électrique par unité de temps comme l'information d'identification de dispositif du dispositif électronique.

2. Procédé selon la revendication 1, dans lequel le contrôle (S12) de l'état d'alimentation de la prise de la barrette d'alimentation qui est connectée au dispositif électronique, en fonction de l'état de fonctionnement du dispositif électronique, comprend :
lorsque le dispositif électronique a terminé une tâche prédéfinie, commander la prise qui est connectée au dispositif électronique pour passer dans un état de désactivation de l'alimentation électrique.

3. Procédé selon l'une quelconque des revendications 1 ou 2, dans lequel l'acquisition (S33) de l'état de fonctionnement du dispositif électronique comprend :
acquérir, via un fil connectant le dispositif électronique et la barrette d'alimentation, d'informations d'état envoyées par le dispositif électronique, les informations d'état comprenant l'état de fonctionnement du dispositif électronique ; ou
recevoir, via une technologie de communication sans fil, les informations d'état envoyées par le dispositif électronique.

4. Appareil de contrôle de l'alimentation électrique d'une barrette d'alimentation, l'appareil comprenant :
un module d'acquisition d'état (61) configuré pour acquérir un état de fonctionnement d'un dispositif électronique ; l'état de fonctionnement du dispositif électronique comprenant le fait que le dispositif électronique est en train d'exécuter une tâche ou qu'il a terminé une tâche prédéfinie, dans lequel la tâche ne comprend pas la charge d'une batterie ; et
un module de commande d'état d'alimentation électrique (62) configuré pour commander un état d'alimentation électrique d'une prise de la barrette d'alimentation qui est connectée au dispositif électronique, selon l'état de fonctionnement du dispositif électronique,
un module de détermination de prise qui comprend : un premier sous-module de détermination configuré pour, lorsqu'il est détecté que le dispositif électronique est branché dans la barrette d'alimentation, déterminer la prise avec laquelle le dispositif électronique est connecté et les informations d'identification du dispositif électronique ; un sous-module d'établissement de correspondance configuré pour établir une correspondance entre les informations d'identification du dispositif électronique et la prise avec laquelle le dispositif électronique est connecté ; et un sous-module de détermination de prise configuré pour, lorsque le dispositif électronique est dans un état de fonctionnement prédéfini, déterminer la prise avec laquelle le dispositif électronique est connecté selon la correspondance,
**caractérisé en ce que** le premier sous-module de détermination comprend en outre :
une unité de détermination de la valeur de courant électrique en temps unitaire configurée pour déterminer une valeur de courant électrique en temps unitaire de l'alimentation électrique du dispositif électronique ;
une première unité de détermination d'informations d'identification de dispositif configurée pour déterminer des informations d'identification de dispositif correspondant à la valeur de courant électrique de temps unitaire selon une table de correspondance pré-enregistrée entre des valeurs de courant électrique de temps unitaire prédéfinies et des informations d'identification de dispositif prédéfinies ; et
une seconde unité de détermination d'informations d'identification de dispositif configurée pour déterminer les informations d'identification de dispositif correspondant à la valeur de courant électrique de temps unitaire comme les informations d'identification de dispositif du dispositif électronique.

5. Appareil selon la revendication 4, dans lequel le module de commande d'état d'alimentation (621) comprend : un troisième sous-module de commande d'état d'alimentation (623) configuré pour, lorsque le dispositif électronique a terminé une tâche prédéfinie, commander la prise qui est connectée au dispositif électronique pour entrer dans un état d'alimentation désactivée.

6. Appareil selon l'une quelconque des revendications 4 ou 5, dans lequel le module d'acquisition d'état (61) comprend :
un premier sous-module d'acquisition d'état (611) configuré pour acquérir, via un fil connectant le dispositif électronique et la barrette d'alimentation, des informations d'état envoyées par le dispositif électronique, les informations d'état comprenant l'état de fonctionnement du dispositif électronique ; ou
un second sous-module d'acquisition d'état (612) configuré pour recevoir, via une technologie de communication sans fil, les informations d'état envoyées par le dispositif électronique.

7. Programme d'ordinateur comprenant des instructions pour exécuter les étapes d'un procédé de commande d'alimentation électrique d'une barrette d'alimentation selon l'une quelconque des revendications 1 à 3 lorsque ledit programme est exécuté par un ordinateur.

8. Support d'enregistrement lisible par un ordinateur et sur lequel est enregistré un programme informatique selon la revendication 7.
